# EUROPEAN PATENT APPLICATION

(11) **EP 3 442 063 A1**
(43) Date of publication of application: **13.02.2019**
(21) Application number: 16897819.5
(22) Date of filing: 08.04.2016
(51) Int. Cl.: H01M 4/86, H01M 8/16

(54) **ELECTRODE, FUEL CELL AND WATER TREATMENT DEVICE**

(71) Applicant: Panasonic Corporation, Kadoma-shi, Osaka 571-8501 (JP)
(72) Inventor: YOSHIKAWA, Naoki, Chuo-ku, Osaka-shi OSAKA 540-6207 (JP); KITADE, Yuuki, Chuo-ku, Osaka-shi OSAKA 540-6207 (JP)
(74) Representative: Müller-Boré & Partner Patentanwälte PartG mbB
(86) International application number: PCT/JP2016/001958
(87) International publication number: WO 2017/175260

(57) **Abstract**

An electrode (10) includes: a first diffusion layer (1) having water repellency and oxygen permeability; and a second diffusion layer (2) that supports a catalyst (4) and is laminated on the first diffusion layer. Then, the second diffusion layer includes a carbon material having a sheet shape. A fuel cell (100) includes: an anode (20) that supports microorganisms; and a cathode (40) composed of the electrode (10). A water treatment device includes: the anode (20) that supports microorganisms purifying a liquid to be treated; and the cathode (40) composed of the electrode (10).

## Description

### TECHNICAL FIELD

The present invention relates to an electrode, a fuel cell and a water treatment device. More specifically, the present invention relates to an electrode capable of purifying wastewater and generating electrical energy, and to a fuel cell and a water treatment device, which use the electrode.

### BACKGROUND ART

In recent years, a microbial fuel cell that generates power using biomass as sustainable energy has attracted attention. The microbial fuel cell is a device that converts organic matter or the like into electrical energy using a metabolic capacity of microorganisms. The microbial fuel cell is an excellent system capable of collecting energy while treating organic matter. However, power generated by the microorganisms is extremely small, and a density of a current to be output is low, and therefore, the microbial fuel cell needs a further improvement.

As a conventional microbial fuel cell (bacterial fuel cell), disclosed is a microbial fuel cell including a plurality of anodes and a plurality of cathodes, both of which are in liquid communication with a liquid to be purified (for example, refer to Patent Literature 1). Then, each of the anodes and the cathodes has a metal electrical conductor disposed to be electrically coupled across a load in an electrical circuit. Moreover, an electrically conductive coating is provided between the metal electrical conductor and the liquid to be purified, and the liquid and the conductor are sealed from each other by this electrically conductive coating.

### CITATION LIST

### PATENT LITERATURE

Patent Literature 1: Japanese Unexamined Patent Application Publication No. 2012-507828

### SUMMARY OF INVENTION

In the microbial fuel cell of Patent Literature 1, the electrically conductive coating that prevents corrosion of the metal electrical conductor is used, whereby degradation of cell characteristics is suppressed. However, the electrically conductive coating has a higher electrical resistance than the metal electrical conductor, and accordingly, has had a problem of degrading the cell characteristics since low resistivity inherent in the metal electrical conductor cannot be enjoyed. Moreover, even if the electrically conductive coating is provided on the metal electrical conductor, it has been possible that a function as the electrical conductor may decrease since the metal electrical conductor corrodes due to long-term use.

The present invention has been made in consideration of such a problem as described above, which is inherent in the prior art. It is an object of the present invention to provide an electrode having a low electrical resistance and capable of enhancing the cell characteristics, and to provide a fuel cell and a water treatment device, which use the electrode.

In order to solve the above-described problems, an electrode according to a first aspect of the present invention includes: a first diffusion layer having water repellency and oxygen permeability; and a second diffusion layer that supports a catalyst, the second diffusion layer being laminated on the first diffusion layer. Then, the second diffusion layer includes a carbon material having a sheet shape.

A fuel cell according to a second aspect of the present invention includes: an anode that supports microorganisms; and a cathode being the above-described electrode.

A water treatment device according to a third aspect of the present invention includes: an anode that supports microorganisms purifying a liquid to be treated; and a cathode being the above-described electrode.

### BRIEF DESCRIPTION OF DRAWINGS

[Fig. 1] Fig. 1 is a schematic cross-sectional view showing an example of an electrode according to an embodiment of the present invention.
[Fig. 2] Fig. 2 is a graph showing a relationship between an ISO air permeance of the electrode according to the embodiment of the present invention and a maximum output power of a fuel cell using the electrode.
[Fig. 3] Fig. 3 is a graph showing a relationship between the ISO air permeance of the electrode according to the embodiment of the present invention and a density of the electrode.
[Fig. 4] Fig. 4(a) is a schematic cross-sectional view showing another example of the electrode according to the embodiment of the present invention, and Fig. 4(b) is an enlarged view of reference symbol A in Fig. 4(a).
[Fig. 5] Fig. 5 is a schematic view showing a fuel cell according to the embodiment of the present invention.
[Fig. 6] Fig. 6 is an exploded perspective view showing a fuel cell unit in the above-described fuel cell.

### DESCRIPTION OF EMBODIMENTS

A detailed description will be given below of an electrode according to this embodiment, and a fuel cell and a water treatment device, which use the electrode. Note that dimensional ratios in the drawings are exaggerated for convenience of explanation, and are sometimes different from actual ratios.

### [Electrode]

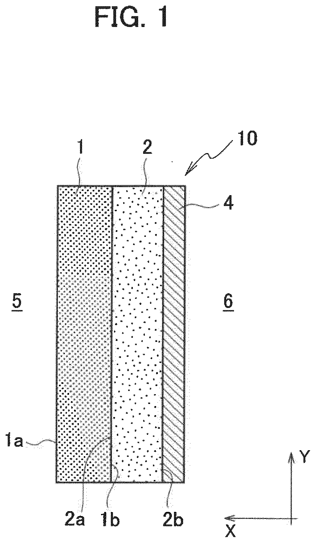

As shown in Fig. 1, an electrode 10 of this embodiment includes: a first diffusion layer 1 having water repellency and oxygen permeability; and a second diffusion layer 2 that supports a catalyst. Then, in the electrode 10, the first diffusion layer 1 is disposed to contact one surface 2a of the second diffusion layer 2.

### (First diffusion layer)

The first diffusion layer 1 is in contact with a gas phase 5, diffuses therein a gas in the gas phase 5, and substantially uniformly supplies the gas to the one surface 2a of the second diffusion layer 2. Therefore, it is preferable that the first diffusion layer 1 be a porous body so that the gas can be diffused therein.

It is preferable that the first diffusion layer 1 have water repellency. The first diffusion layer 1 has water repellency, whereby a decrease of gas diffusibility can be suppressed, which may result from the fact that pores of the porous body are closed due to dew condensation and the like. Moreover, as will be described later, when the electrode 10 is used for the fuel cell or the water treatment device, it becomes difficult for the liquid phase to penetrate the inside of the first diffusion layer 1, and it becomes easy for the first diffusion layer 1 to contact the gas phase. Moreover, the first diffusion layer 1 is configured to allow movement of the gas going from the gas phase 5 to the liquid phase while satisfactorily separating the gas phase 5 and the liquid phase from each other. That is, the first diffusion layer 1 can suppress the liquid to be treated in the liquid phase from moving to the gas phase 5 while allowing the permeation of the gas in the gas phase 5 and moving the gas to the second diffusion layer 2. Note that such "separation" as used herein refers to physical blocking.

A material that composes the first diffusion layer 1 is not particularly limited as long as the material can diffuse the gas in the gas phase 5. As the material that composes the first diffusion layer 1, for example, there can be used at least one selected from the group consisting of polyethylene, polypropylene, nylon, polytetrafluoroethylene, silicone, polydimethylsiloxane, ethylcellulose, poly-4-methylpentene-1, polybutadiene, polytetrafluoroethylene and butyl rubber. Moreover, two or more of these materials can also be used in combination. Each of these materials can easily form the porous body, and further, also has high water repellency, and accordingly, can enhance the gas diffusibility by suppressing the pores from being closed.

Moreover, it is preferable that the first diffusion layer 1 be composed of at least one selected from the group consisting of woven fabric, nonwoven fabric and a film, which are made of the above-described material. Note that, when the first diffusion layer 1 is composed of the film of any of the above-described materials, it is preferable that a plurality of through holes be provided in a lamination direction X of the first diffusion layer 1 and the second diffusion layer 2. The first diffusion layer 1 may be a single layer composed of at least one selected from the group consisting of the above-mentioned woven fabric, nonwoven fabric and film, or may be plural layers composed by laminating a plurality of such layers of the selected material.

In order to enhance the water repellency, the first diffusion layer 1 may be subjected to water-repellent treatment using a water-repellent agent as necessary. Specifically, a water-repellent agent such as polytetrafluoroethylene (PTFE) may be adhered to the porous body that composes the first diffusion layer 1, and may enhance the water repellency thereof.

In order to efficiently supply the gas to the one surface 2a of the second diffusion layer 2, as shown in Fig. 1, it is preferable that the first diffusion layer 1 be in contact with the second diffusion layer 2. That is, it is preferable that a surface 1b in the first diffusion layer 1 be in contact with the opposite one surface 2a of the second diffusion layer 2. Moreover, the surface 1b in the first diffusion layer 1 and the surface 2a of the second diffusion layer 2 may be pressed against each other. In this way, the diffused gas is directly supplied to the surface 2a of the second diffusion layer 2, and the oxygen permeability can be enhanced. However, if the gas is supplied to the surface 2a of the second diffusion layer 2, then a gap may be present between the surface 1b of the first diffusion layer 1 and the surface 2a of the second diffusion layer 2.

### (Second diffusion layer)

In addition to the first diffusion layer 1, the electrode 10 of this embodiment includes the second diffusion layer 2 that supports a catalyst 4. The second diffusion layer 2 has a function to conduct electrons with an external circuit. The electrons are generated by a local cell reaction to be described later. Therefore, the second diffusion layer 2 includes a carbon material having a sheet shape. The carbon material is less likely to corrode even if being brought into contact with the liquid to be treated, and further, has low electrical resistivity. Accordingly, the carbon material can ensure high electrical conductivity for a long period.

Here, Table 1 shows electrical resistivities of representative metal materials and carbon materials. As shown in Table 1, a graphite sheet has the lowest electrical resistivity among the carbon materials. However, the electrical resistivity of the carbon material is higher than that of a stainless-steel plate with a thickness of 1 mm. However, the metal material is not used in a bulk state, that is, a state of a metal plate. Actually, the metal material is used in a shape of a wire net or a wire in most cases. Therefore, it is seen that the electrical resistivity of the carbon material is equivalent to that of the metal material. As described above, the carbon material is less likely to corrode and deteriorate even if being brought into contact with the liquid to be treated. Moreover, as shown in Table 1, the carbon material has the electrical resistivity equivalent to that of the stainless-steel wire net. Accordingly, the carbon material can obtain high electrical conductivity for a long period.

**[Table 1]**

| Electrode material | | Measured resistivity (Ω▪cm) |
|---|---|---|
| Metal material | Stainless-steel plate (SUS316 plate) (t = 1.0) | 4.7×10⁻⁶ |
| | Stainless-steel wire net (SUS316 wire net) (150 mesh, ϕ = 0.06) | 3.2×10⁻⁴ |
| Carbon material | Carbon paper | 9.4×10⁻⁴ |
| | Carbon cloth | 3.3×10⁻³ |
| | Graphite sheet | 2.5×10⁻⁴ |

As such a sheet-shaped carbon material constituting the second diffusion layer 2, for example, at least one selected from the group consisting of carbon paper, carbon cloth and graphite sheet can be used. Moreover, the second diffusion layer 2 may be composed of one selected from the group consisting of the carbon paper, the carbon cloth and the graphite sheet, and may be a laminated body formed by laminating a plurality of these on one another. Such carbon paper that is a nonwoven fabric of carbon fiber, such a carbon cloth that is woven fabric of carbon fiber, and such a graphite sheet made of graphite have high corrosion resistance and electrical resistivity equal to those of a metal material as shown in Table 1, and accordingly, it becomes possible to achieve both of durability and electrical conductivity of the electrode.

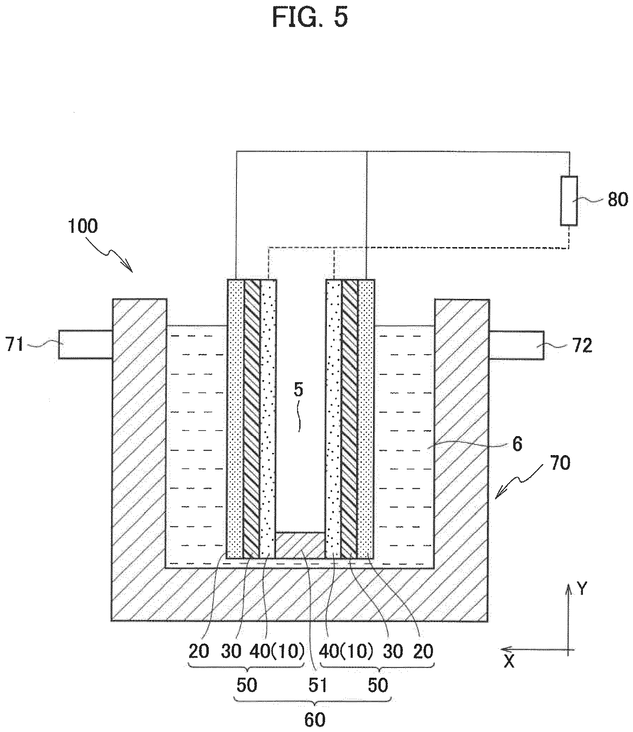

It is preferable that the second diffusion layer 2 contain graphite, and further, that graphene layers in the graphite be arrayed along a direction Y perpendicular to a lamination direction X of the first diffusion layer 1 and the second diffusion layer 2. The graphene layers composed of a six-membered ring structure of carbon are arrayed as described above, whereby electrical conductivity in the direction Y perpendicular to the lamination direction X is enhanced more than electrical conductivity in the lamination direction X of the first diffusion layer 1 and the second diffusion layer 2. Therefore, as shown in Fig. 5, it becomes easy to conduct the electrons, which are thus generated by the local cell reaction, to an external circuit 80, and it becomes possible to further enhance efficiency of the cell reaction. Note that, particularly preferably, the second diffusion layer 2 is composed of a graphite sheet.

Here, F. L. LaQue: Marine Corrosion Causes and Prevention, John Wiley and Sons, p. 179 (1975) describes corrosion potentials of various metals in static seawater at normal temperature. The document describes that a potential of graphite with respect to the standard calomel electrode is +0.3 to +0.2 (V vs. SCE), and that a potential of platinum with respect to the standard calomel electrode is +0.25 to +0.18 (V vs. SCE). That is, since graphite has higher corrosion resistance than platinum, graphite is particularly excellent as a material of the second diffusion layer 2.

The graphite sheet mentioned above can be obtained as follows. First, natural graphite is subjected to chemical treatment by acid, and inserts are formed in inter-layer spaces between graphene layers of graphite. Next, this is rapidly heated, whereby expanded graphite is obtained in which the inter-layer spaces between the graphene layers are stretched and expanded by a gas pressure caused by thermal decomposition of such interlayer inserts. Then, this expanded graphite is pressurized and rolled, whereby the graphite sheet is obtained. Since the graphene layers in the graphite are arrayed in the direction Y perpendicular to the lamination direction X, the graphite sheet thus obtained can be particularly preferably used as the material of the second diffusion layer 2.

In order to ensure stable performance, in the electrode 10 of this embodiment, it is preferable to efficiently supply the catalyst 4 with oxygen that has permeated the first diffusion layer 1. Therefore, it is preferable that the second diffusion layer 2 be a porous body having a large number of pores in which oxygen permeates.

Then, it is preferable that the second diffusion layer 2 have ISO air permeance ranging from 2.0×10⁻⁵ µm/Pa·s to 0.38 µm/Pa·s. The air permeance is an average flow rate of the air that passes per unit area, unit pressure difference and unit time, and the higher a numerical value thereof is, the easier the air is to pass. The second diffusion layer 2 has the air permeance within such a range as described above, whereby sufficient oxygen can be supplied to the catalyst 4, and it becomes possible to realize a cathode, a fuel cell and a water treatment device, which have stable performance.

Specifically, the fact that the ISO air permeance of the second diffusion layer 2 is 2.0×10⁻⁵ µm/Pa·s or more means that a large number of pores are formed, and therefore, the oxygen permeability is enhanced, and a contact ratio of oxygen and the catalyst 4 can be increased. Moreover, by the fact that the ISO air permeance of the second diffusion layer 2 is 0.38 µm/Pa·s or less, it becomes possible to ensure strength for constituting the sheet-shaped diffusion layer while enhancing the oxygen permeability. That is, though the oxygen permeability is enhanced as the ISO air permeance of the second diffusion layer 2 is higher, a density of the second diffusion layer 2 decreases when the ISO air permeance is high, and this decrease of the density may sometimes lead to insufficient strength of the second diffusion layer 2. Therefore, it is preferable that the ISO air permeance of the second diffusion layer 2 be 0.38 µm/Pa·s or less.

Note that, from a viewpoint of further enhancing the output power when the electrode 10 is used for a fuel cell, it is more preferable that the ISO air permeance of the second diffusion layer 2 be 7.9×10⁻⁵ µm/Pa·s to 0.38 µm/Pa·s. Moreover, it is particularly preferable that the ISO air permeance of the second diffusion layer 2 be 2.9×10⁻⁴ µm/Pa·s to 0.38 µm/Pa·s. Note that the ISO air permeance of the second diffusion layer 2 can be measured according to Japanese Industrial Standards JIS P8117:2009 (Paper and board-Determination of air permeance and air resistance (medium range): Gurley method).

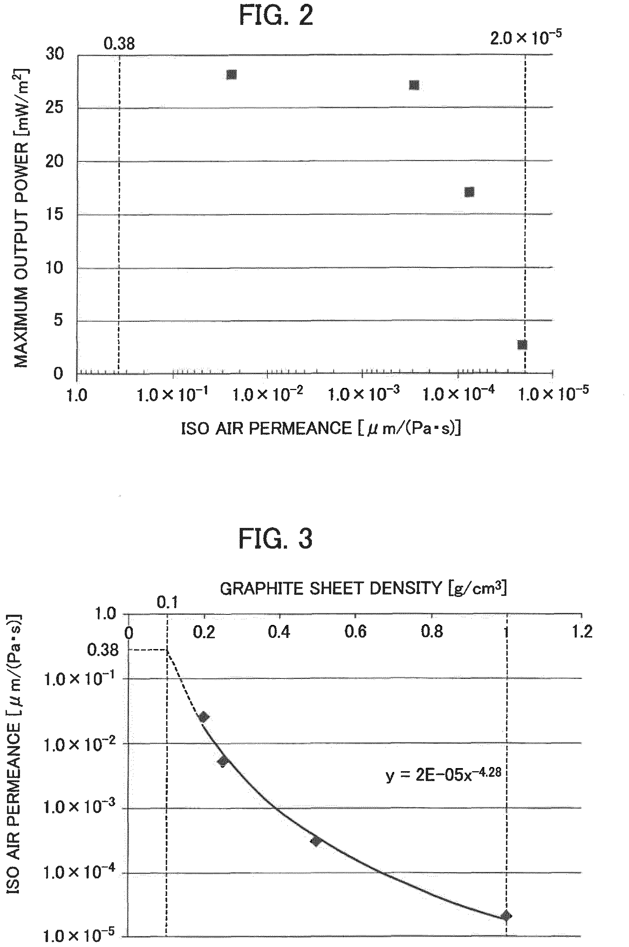

Fig. 2 is an example of a graph showing an investigated relationship between the ISO air permeance of the second diffusion layer 2 and the maximum output power of a fuel cell fabricated using a graphite sheet as the second diffusion layer 2. As shown in Fig. 2, it is seen that the maximum output power of the fuel cell is enhanced when the ISO air permeance of the second diffusion layer 2 is 2.0×10⁻⁵ µm/Pa·s or more. Moreover, it is seen that the maximum output power is further enhanced when the ISO air permeance of the second diffusion layer 2 is 7.9×10⁻⁵ µm/Pa·s, and that the maximum output power is particularly good when the ISO air permeance of the second diffusion layer 2 is 2.9×10⁻⁴ µm/Pa·s or more. Table 2 shows specific numerical values of the ISO air permeance of the second diffusion layer 2 and the maximum output power of the fuel cell, in which the ISO air permeance and the maximum output power are shown in Fig. 2.

**[Table 2]**

| ISO air permeance of second diffusion layer (Graphite sheet) [µm/Pa·s] | Maximum output power of fuel cell [mW/m²] |
|---|---|
| 2.12×10⁻⁵ | 2.6 |
| 7.94×10⁻⁵ | 17 |
| 2.99×10⁻⁴ | 27 |
| 2.48×10⁻² | 28 |

As mentioned above, the second diffusion layer 2 is a porous body, whereby the oxygen permeability is enhanced, thus making it easy to ensure stable performance. Therefore, it is preferable that the density of the second diffusion layer 2 be 0.10 g/cm³ to 1.0 g/cm³. The fact that the density of the second diffusion layer 2 is 0.10 g/cm³ or more makes it possible to ensure strength for maintaining the sheet shape. Moreover, the fact that the density of the second diffusion layer 2 is 1.0 g/cm³ or less makes it possible to set the ISO air permeance of the second diffusion layer 2 to 2.0×10⁻⁵ µm/Pa·s or more.

Fig. 3 shows a relationship between the density of the graphite sheet as the second diffusion layer 2 and the ISO air permeance. As shown in Fig. 3, when the density of the graphite sheet is 1.0 g/cm³, the ISO air permeance becomes 2.0×10⁻⁵ µm/Pa·s, and the ISO air permeance tends to be increased as the density of the graphite sheet decreases. Then, according to an approximation curve obtained by a least squares method shown in Fig. 3, it is seen that the ISO air permeance becomes 0.38 µm/Pa·s when the density of the graphite sheet is 0.10 g/cm³. Therefore, according to a lower limit value (0.10 g/cm³) of the density in the second diffusion layer 2, it is preferable to set an upper limit value of the ISO air permeance to 0.38 µm/Pa·s. Table 3 shows specific numerical values of the density of the graphite sheet and the ISO air permeance, in which the density and the ISO air permeance are shown in Fig. 3.

**[Table 3]**

| Density of second diffusion layer (graphite sheet) [g/cm³] | ISO air permeance of second diffusion layer (graphite sheet) [µm/Pa·s] |
|---|---|
| 1.0 | 2.12×10⁻⁵ |
| 0.5 | 2.99×10⁻⁴ |
| 0.25 | 5.24×10⁻³ |
| 0.2 | 2.48×10⁻² |

Such a carbon material sheet constituting the second diffusion layer 2 may have a shape having at least one through hole in the lamination direction X of the first diffusion layer 1 and the second diffusion layer 2 in a supporting portion that supports the catalyst 4. The presence of the through holes in the carbon material sheet enables more efficient supply of oxygen to the catalyst 4, the oxygen having permeated the first diffusion layer 1.

It is preferable that, in the second diffusion layer 2, the electrical resistivity in the direction Y perpendicular to the lamination direction X of the first diffusion layer 1 and the second diffusion layer 2 be 20 µΩ·m or less. Moreover, it is preferable that, in the second diffusion layer 2, the electrical resistivity in the lamination direction X of the first diffusion layer 1 and the second diffusion layer 2 be 100 times or more the electrical resistivity in the direction Y perpendicular to the lamination direction X. The fact that the electrical resistivity remains within the above-described range makes it easier to conduct the electrons generated by the local cell reaction to the external circuit 80. A lower limit of the electrical resistivity in the direction Y perpendicular to the lamination direction X in the second diffusion layer 2 is not particularly limited; however, for example, can be set to 0.10 µΩ·m or more. An upper limit of the electrical resistivity in the lamination direction X in the second diffusion layer 2 is not particularly limited, either; however, for example, can be set to 1000 times or less the electrical resistivity in the direction Y. Note that each electrical resistivity mentioned above can be measured, for example, by the four-point probe method.

In this embodiment, the second diffusion layer 2 supports the catalyst 4. That is, as shown in Fig. 1, the second diffusion layer 2 supports, on the surface thereof, the catalyst 4 for promoting the local cell reaction to be described later. The catalyst 4 is provided, whereby there promotes a reaction between the oxygen transferred from the first diffusion layer 1 and hydrogen ions having permeated an ion transfer layer to be described later and moved to the second diffusion layer 2. This promotion of the reaction makes it possible to increase reduction efficiency of the oxygen. Therefore, it becomes possible to achieve a more efficient cell reaction.

It is preferable that the catalyst 4 capable of being supported on the second diffusion layer 2 be an oxygen reduction catalyst. The oxygen reduction catalyst is supported on the second diffusion layer 2, whereby it becomes possible to further enhance a reaction rate of the transferred oxygen and the hydrogen ions. The oxygen reduction catalyst is not particularly limited; however, preferably, contains platinum. Moreover, the oxygen reduction catalyst may include a carbon material doped with nonmetal atoms and metal atoms. The carbon material is not particularly limited; however, may be graphite, carbon black, graphene, carbon nanotube and the like. The atoms doped into the carbon material are not particularly limited. The nonmetal atoms may be, for example, nitrogen atoms, boron atoms, sulfur atoms, phosphorus atoms and the like. Moreover, the metal atoms may be, for example, iron atoms, copper atoms and the like.

The second diffusion layer 2 can support the catalyst 4 on a surface 2b opposite to the surface 2a in contact with the first diffusion layer 1. That is, as shown in Fig. 1, slurry of the catalyst 4 is applied on the surface 2b of the second diffusion layer 2, whereby a coating film composed of the catalyst 4 may be formed. However, in order to enhance adhesive properties between the second diffusion layer 2 and the catalyst 4, and to promote the oxygen reduction reaction for a long period, the catalyst 4 and a support sheet may be compounded to each other to fabricate a catalyst sheet, and the fabricated catalyst sheet may be joined to the second diffusion layer 2. That is, first, the electrically conductive support sheet is immersed into the slutty containing the catalyst 4, followed by drying, whereby the catalyst sheet is fabricated. Thereafter, the obtained catalyst sheet is disposed on the surface 2b of the second diffusion layer 2, whereby the catalyst 4 may be supported. Note that electrically conductive nonwoven fabric may be used as the support sheet for example. Moreover, one type selected from the group consisting of the above-mentioned carbon paper, carbon cloth and graphite sheet can be used as the support sheet.

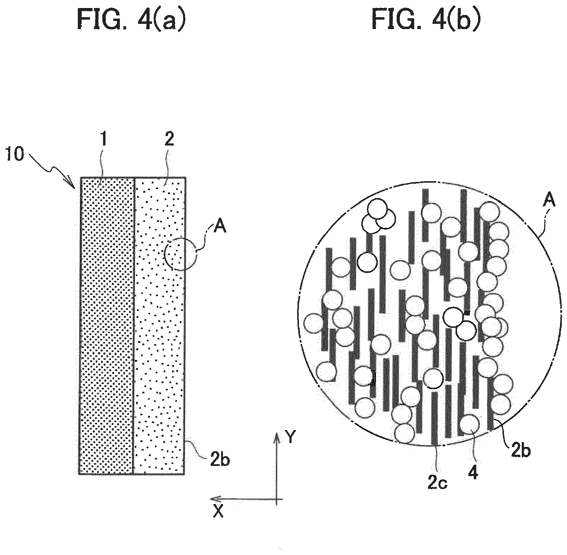

Moreover, in order to enhance the adhesive properties between the second diffusion layer 2 and the catalyst 4, the catalyst 4 and the material constituting the second diffusion layer 2 may be compounded to each other. Specifically, as shown in Fig. 4, the second diffusion layer 2 may contain graphite, and the catalyst 4 may be supported in inter-layer spaces of the graphene layers 2c in the graphite. The catalyst 4 is supported in the inter-layer spaces of the graphene layers 2c, thus making it possible to suppress the catalyst 4 from being desorbed from the second diffusion layer 2. Moreover, since the catalyst 4 is diffused in the inside of the second diffusion layer 2, the transferred oxygen and the hydrogen ions become easy to contact each other on the surfaces of the catalyst 4, thus making it possible to further enhance the reduction reaction rate of the oxygen.

As described above, the electrode 10 of this embodiment includes: the first diffusion layer 1 having the water repellency and the oxygen permeability; and the second diffusion layer 2 that supports the catalyst 4, the second diffusion layer 2 being laminated on the first diffusion layer 1, wherein the second diffusion layer 2 includes the carbon material having the sheet shape. Such a sheet-shaped carbon material is applied to the second diffusion layer 2, thus making it possible to suppress the corrosion when the electrode 10 is applied to the fuel cell. Moreover, the carbon material has electrical resistivity equivalent to that of metal, and accordingly, it becomes possible to suppress an increase of internal resistance of the electrode 10, the increase following a size increase thereof, and a productivity decrease of the electrical energy. Furthermore, the first diffusion layer 1 having the water repellency and the oxygen permeability is laminated on the second diffusion layer 2, whereby a waterproof electrode assembly can be fabricated as will be described later. Therefore, the electrode 10 becomes capable of exerting high cell characteristics by being supplied with oxygen in the atmosphere.

### [Fuel cell]

Next, a description will be given of the fuel cell according to this embodiment. As shown in Fig. 5, a fuel cell 100 according to this embodiment includes: anodes 20 which support microorganisms; and cathodes 40, each of which is composed of the above-mentioned electrode 10. Note that the fuel cell 100 may further include ion transfer layers 30, each of which is provided between the anode 20 and the cathode 40, and permeates hydrogen ions.

Each of the anodes 20 has a structure in which microorganisms are supported on an electrically conductive sheet having electrical conductivity. As the electrically conductive sheet, there can be used at least one selected from the group consisting of an electrically conductive porous sheet, an electrically conductive woven fabric sheet, and an electrically conductive nonwoven fabric sheet. Moreover, the electrically conductive sheet may be a laminated body formed by laminating a plurality of sheets on one another. Such a sheet having a plurality of pores is used as the electrically conductive sheet of the anode 20, whereby it becomes easy for hydrogen ions generated by the local cell reaction to be described later to move in a direction of the ion transfer layer 30, thus making it possible to increase the rate of the oxygen reduction reaction. Moreover, from the viewpoint of enhancing the ion permeability, it is preferable that the electrically conductive sheet of the anode 20 have spaces (voids) continuous in the lamination direction X of the electrode 10, the anode 20 and the ion transfer layer 30, that is, in a thickness direction of the electrically conductive sheet.

The electrically conductive sheet may be a metal plate having a plurality of through holes in the thickness direction. Therefore, as a material constituting the electrically conductive sheet of the anode 20, for example, there can be used at least one selected from the group consisting of electrically conductive metal such as aluminum, copper, stainless steel, nickel and titanium, carbon paper and carbon felt.

As the electrically conductive sheet of the anode 20, such a graphite sheet usable in the second diffusion layer 2 of the electrode 10 may be used. Moreover, it is preferable that the anode 20 contain graphite, and further, that the graphene layers in the graphite be arrayed along a plane in directions Y and Z perpendicular to the lamination direction X of the electrode 10, the anode 20 and the ion transfer layer 30. The graphene layers are arrayed as described above, whereby the electrical conductivity in each of the directions Y and Z perpendicular to the lamination direction X is enhanced more than the electrical conductivity in the lamination direction X of the electrode 10, the anode 20 and the ion transfer layer 30. Therefore, it becomes easy to conduct the electrons, which are generated by the local cell reaction of the anode 20, to the external circuit 80, and it becomes possible to further enhance the efficiency of the cell reaction.

The microorganisms supported on the anode 20 are not particularly limited as long as being microorganisms which decompose the organic matter or the compound containing nitrogen (that is, a nitrogen-containing compound) in the liquid to be treated 6; however, it is preferable to use anaerobic microorganisms which do not require oxygen for growth thereof. The anaerobic microorganisms do not require air for oxidatively decomposing the organic matter in the liquid to be treated 6. Therefore, electric power required to feed air can be reduced to a large extent. Moreover, since free energy acquired by the microorganisms is small, it becomes possible to reduce an amount of generated sludge. It is preferable that the anaerobic microorganisms held by the anode 20 be, for example, electricity-producing bacteria having an extracellular electron transfer mechanism. Specific examples of the anaerobic microorganisms include Geobacter bacteria, Shewanella bacteria, Aeromonas bacteria, Geothrix bacteria, and Saccharomyces bacteria.

It is preferable that the fuel cell 100 of this embodiment include the ion transfer layers 30, each of which allows the permeation of the hydrogen ions. Each of the ion transfer layers 30 has a function to allow the permeation of the hydrogen ions generated at the anode 20, and to move the generated hydrogen ions to the cathode 40. As the ion transfer layer 30, an ion exchange membrane using ion exchange resin can be used. As the ion exchange resin, for example, NAFION (registered trademark) made by DuPont Kabushiki Kaisha, and Flemion (registered trademark) and Selemion (registered trademark) made by Asahi Glass Co., Ltd. can be used.

Moreover, as the ion transfer layer 30, a porous membrane having pores capable of allowing the permeation of the hydrogen ions may be used. That is, the ion transfer layer 30 may be a sheet having spaces (voids) for allowing the hydrogen ions to move between the anode 20 and the cathode 40. Therefore, it is preferable that the ion transfer layer 30 have at least one selected from the group consisting of a porous sheet, a woven fabric sheet and a nonwoven fabric sheet. Moreover, at least one selected from the group consisting of a glass fiber membrane, a synthetic fiber membrane and a plastic nonwoven fabric can be used for the ion transfer layer 30, and the ion transfer layer 30 may be a laminated body formed by laminating a plurality of these on one another. Since such a porous sheet has a large number of pores in an inside thereof, it becomes possible for the hydrogen ions to move therethrough with ease. Note that a pore size of the ion transfer layer 30 is not particularly limited as long as the hydrogen ions can move from the anode 20 to the cathode 40.

As mentioned above, the ion transfer layer 30 has such a function to allow the permeation of the hydrogen ions generated at the anode 20, and to move the generated hydrogen ions to the cathode 40 side. Therefore, for example, if the anode 20 and the cathode 40 are in close proximity with each other without contact, then the hydrogen ions can move from the anode 20 to the cathode 40. Therefore, in the fuel cell 100 of this embodiment, the ion transfer layer 30 is not an essential constituent. However, such provision of the ion transfer layer 30 makes it possible to efficiently move the hydrogen ions from the anode 20 to the cathode 40, and therefore, it is preferable that the ion transfer layer 30 be provided from a viewpoint of enhancing the output power.

The fuel cell 100 of this embodiment includes the cathodes 40, each of which is composed of the electrode 10 mentioned above. That is, the cathode 40 includes: the first diffusion layer 1 having water repellency and oxygen permeability; and the second diffusion layer 2 that supports the catalyst 4. Then, the ion transfer layer 30 is disposed on the surface 2b of the second diffusion layer 2.

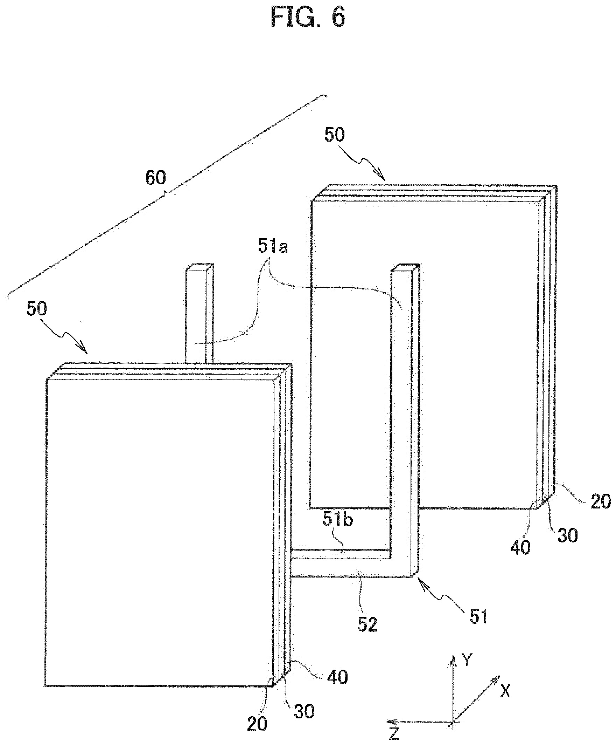

As shown in Fig. 5, the fuel cell 100 of this embodiment includes a plurality of electrode assemblies 50, each of which is composed of the anode 20, the ion transfer layer 30 and the cathode 40. Moreover, as shown in Fig. 5 and Fig. 6, such two electrode assemblies 50 are laminated on each other via a cassette substrate 51 so that the first diffusion layers 1 of the cathodes 40 face each other. The cassette substrate 51 is a U-shaped frame member that goes along outer peripheral portions of the first diffusion layers 1 of the cathodes 40. In the cassette substrate 51, an upper portion is open. That is, the cassette substrate 51 is a frame member in which bottom surfaces of two first columnar members 51a are coupled to each other by a second columnar member 51b. Then, side surfaces 52 of the cassette substrate 51 are joined to outer peripheral portions of the surfaces 1a in the first diffusion layers 1 of the cathodes 40, whereby the liquid to be treated 6 can be prevented from leaking to the inside of the cassette substrate 51 from the outer peripheral portions of the first diffusion layers 1.

Then, as shown in Fig. 5, a fuel cell unit 60 formed by laminating the two electrode assemblies 50 and the cassette substrate 51 on one another is disposed in an inside of a wastewater tank 70 so that the gas phase 5 communicating with the atmosphere is formed. The liquid to be treated 6 is held in the inside of the wastewater tank 70, and the anodes 20, the ion transfer layers 30, the second diffusion layers 2 and catalysts 4 of the cathodes 40 are immersed in the liquid to be treated 6. That is, the first diffusion layers 1 constituting the cathodes 40 are disposed so as to contact the gas containing oxygen, and the second diffusion layers 2 are disposed so as to contact the liquid to be treated 6.

As mentioned above, each of the first diffusion layers 1 of the cathodes 40 has water repellency. Therefore, the liquid to be treated 6 held in the inside of the wastewater tank 70 and the inside of the cassette substrate 51 are separated from each other, and the gas phase 5 is formed in an inner space formed of the two electrode assemblies 50 and the cassette substrate 51. Then, as shown in Fig. 5, the cathodes 40 and the anodes 20 are electrically connected individually to the external circuit 80.

The wastewater tank 70 holds the liquid to be treated 6 in the inside thereof, and may have a configuration through which the liquid to be treated 6 is circulated. For example, as shown in Fig. 5, the wastewater tank 70 may be provided with a liquid supply port 71 for supplying the liquid to be treated 6 to the wastewater tank 70 and a liquid discharge port 72 for discharging the treated liquid 6 from the wastewater tank 70.

It is preferable that the wastewater tank 70 be maintained in an anaerobic condition where, for example, molecular oxygen is absent or a concentration of the molecular oxygen is extremely small even if the molecular oxygen is present. In this way, it becomes possible to keep the liquid to be treated 6 in the wastewater tank 70 so that the liquid to be treated 6 can hardly contact oxygen.

Next, a description will be given of a function of the fuel cell (microbial fuel cell) 100 according to this embodiment. When the fuel cell 100 is operated, the liquid to be treated 6 containing at least either one of the organic matter and the nitrogen-containing compound is supplied to each of the anodes 20, and air (or oxygen) is supplied to each of the cathodes 40. At this time, the air is continuously supplied through an opening portion provided in an upper portion of the cassette substrate 51. Note that, preferably, the liquid to be treated 6 is also continuously supplied through the liquid supply port 71 and the liquid discharge port 72.

Then, in the cathode 40, air is diffused by the first diffusion layer 1 and reaches the second diffusion layer 2. Moreover, in the anode 20, hydrogen ions and electrons are generated from the organic matter and/or the nitrogen-containing compound in the liquid to be treated 6 by the catalytic action of the microorganisms. The generated hydrogen ions permeate the ion transfer layer 30 and move to the cathode 40. Moreover, the generated electrons move to the external circuit 80 through the electrically conductive sheet of the anode 20, and further, move from the external circuit 80 to the second diffusion layer 2 of the cathode 40. Then, the hydrogen ions and the electrons, which have moved to the second diffusion layer 2, are combined with oxygen by an action of the catalyst 4, and are consumed as water. At this time, the external circuit 80 recovers electrical energy flowing in such a closed circuit.

As mentioned above, the second diffusion layer 2 of the cathode 40 has the sheet-shaped carbon material. Therefore, the corrosion of the cathode 40 is suppressed, thus making it possible to efficiently generate power for long period. Moreover, the carbon material has electrical resistivity equivalent to that of metal, and therefore, it becomes possible to suppress the increase of the internal resistance. Furthermore, the first diffusion layer 1 having the water repellency and the oxygen permeability is laminated on the second diffusion layer 2, whereby the gas phase 5 formed in the inside of the fuel cell unit 60 can be made waterproof. Therefore, the cathode 40 becomes capable of exerting high cell characteristics by supplying the gas phase 5 with oxygen in the atmosphere.

Here, for example, each of the anodes 20 according to this embodiment may be modified by electron transport mediator molecules. Alternatively, the liquid to be treated 6 in the wastewater tank 70 may contain the electron transport mediator molecules. In this way, the electron transfer from the anaerobic microorganisms to the anode 20 is promoted, and more efficient liquid treatment can be achieved.

Specifically, in the metabolic mechanism by the anaerobic microorganisms, electrons are transferred within cells or with terminal electron acceptors. When such mediator molecules are introduced into the liquid to be treated 6, the mediator molecules act as the terminal electron acceptors for metabolism, and deliver the received electrons to the anode 20. As a result, it becomes possible to enhance an oxidative degradation rate of the organic matter and the like in the liquid to be treated 6. The electron transport mediator molecules as described above are not particularly limited; however, for example there can be used at least one selected from the group consisting of neutral red, anthraquinone-2,6-disulfonate (AQDS), thionine, potassium ferricyanide, and methyl viologen.

Note that the fuel cell unit 60 shown in Fig. 5 and Fig. 6 has a configuration in which the two electrode assemblies 50 and the cassette substrate 51 are laminated on one another. However, this embodiment is not limited to this configuration. For example, the electrode assembly 50 may be joined only to the one surface 52 of the cassette substrate 51, and other side surface thereof may be sealed by a plate member. Moreover, in the cassette substrate 51 shown in Fig. 6, the whole of the upper portion thereof is open; however, the upper portion may be partially open or may not be open as long as it is possible to introduce air (oxygen) into the inside of the cassette substrate 51.

### [Water treatment device]

Next, a description will be made of the water treatment device according to this embodiment. The water treatment device of this embodiment includes: the anodes 20 which support microorganisms for purifying the liquid to be treated; and the cathodes 40 composed of the above-mentioned electrodes 10. Note that the water treatment device may further include the ion transfer layers 30, each of which is provided between the anode 20 and the cathode 40, and permeates the hydrogen ions.

As mentioned above, the fuel cell 100 of this embodiment supplies the liquid to be treated 6, which contains at least either one of the organic matter and the nitrogen-containing compound, to the anodes 20. Then, by the metabolism of the microorganisms supported on each of the anodes 20, the organic matter and/or the nitrogen-containing compound in the liquid to be treated 6 generates carbon dioxide or nitrogen together with hydrogen ions and electrons.

Specifically, for example, when the liquid to be treated 6 contains glucose as the organic matter, then carbon dioxide, hydrogen ions and electrons are generated by the following local cell reaction.
- Anode 20: C₆H₁₂O₆ + 6H₂O → 6CO₂ + 24H⁺+24e⁻
- Cathode 40: 6O₂ + 24H⁺ + 24e⁻ → 12H₂O

Moreover, when the liquid to be treated 6 contains ammonia as the nitrogen-containing compound, then nitrogen, hydrogen ions and electrons are generated by the following local cell reaction.
- Anode 20: 4NH₃ → 2N₂ + 12H⁺ + 12e⁻
- Cathode 40: 3O₂ + 12H⁺ + 12e⁻ → 6H₂O

As described above, the water treatment device of this embodiment uses the fuel cell 100, whereby the organic matter and the nitrogen-containing compound in the liquid to be treated 6 come into contact with the anodes 20 and are oxidatively decomposed, and accordingly, the liquid to be treated 6 can be purified. Moreover, as mentioned above, in the wastewater tank 70, there can be provided: the liquid supply port 71 for supplying the liquid to be treated 6 to the wastewater tank 70; and the liquid discharge port 72 for discharging the treated liquid 6 from the wastewater tank 70, and then the liquid to be treated 6 can be supplied continuously. Therefore, it becomes possible to continuously bring the liquid to be treated 6 into contact with the anodes 20, and to efficiently process the liquid to be treated 6.

Although this embodiment has been described above, this embodiment is not limited to these described above, and various modifications are possible within the scope of the spirit of this embodiment. Specifically, in Fig. 6, the anodes 20, the ion transfer layers 30, and the cathodes 40 composed of the electrodes 10 including the first diffusion layers 1 and the second diffusion layers 2 are formed into a rectangular shape. However, the shape of these is not particularly limited, and can be arbitrarily changed depending on a size of the fuel cell, desired power generation performance and purification performance, and the like. Moreover, an area of each of the layers can also be arbitrarily changed as long as desired functions can be exerted.

### INDUSTRIAL APPLICABILITY

The electrode of the present invention uses the sheet-shaped carbon material for the diffusion layers, and therefore, the corrosion can be suppressed to keep the electrical resistance low. Moreover, the carbon material has electrical resistivity equivalent to that of metal, and accordingly, it becomes possible to suppress the increase of the internal resistance of the electrode, the increase following the size increase thereof, and the productivity decrease of the electrical energy.

### REFERENCE SIGNS LIST

- 1: First diffusion layer
- 2: Second diffusion layer
- 4: Catalyst
- 6: Liquid to be treated
- 10: Electrode
- 20: Anode
- 30: Ion transfer layer
- 40: Cathode
- 100: Fuel cell

## Claims

1. An electrode comprising:
a first diffusion layer having water repellency and oxygen permeability; and
a second diffusion layer that supports a catalyst, the second diffusion layer being laminated on the first diffusion layer,
wherein the second diffusion layer includes a carbon material having a sheet shape.

2. The electrode according to claim 1, wherein the second diffusion layer includes graphite, and
graphene layers in the graphite are arrayed along a direction perpendicular to a lamination direction of the first diffusion layer and the second diffusion layer.

3. The electrode according to claim 2, wherein ISO air permeance of the second diffusion layer is 2.0×10⁻⁵ µm/Pa·s to 0.38 µm/Pa·s.

4. The electrode according to claim 2 or 3, wherein a density of the second diffusion layer is 0.10 g/cm³ to 1.0 g/cm³.

5. The electrode according to any one of claims 1 to 4, wherein, in the second diffusion layer, electrical resistivity in the direction perpendicular to the lamination direction of the first diffusion layer and the second diffusion layer is 20 µΩ·m or less, and electrical resistivity in the lamination direction of the first diffusion layer and the second diffusion layer is 100 times or more the electrical resistivity in the direction perpendicular to the lamination direction.

6. The electrode according to any one of claims 1 to 5, wherein the second diffusion layer includes graphite, and
the catalyst is supported in inter-layer spaces of the graphene layers in the graphite.

7. The electrode according to any one of claims 1 to 6, wherein the catalyst is an oxygen reduction catalyst.

8. A fuel cell comprising:
an anode that supports microorganisms; and
a cathode being the electrode according to any one of claims 1 to 7.

9. The fuel cell according to claim 8, wherein the first diffusion layer constituting the cathode is disposed to contact a gas containing oxygen, and the second diffusion layer is disposed to contact a liquid to be treated.

10. The fuel cell according to claim 9, wherein the liquid to be treated contains organic matter.

11. The fuel cell according to any one of claims 8 to 10, wherein the anode includes at least one selected from the group consisting of an electrically conductive porous sheet, an electrically conductive woven fabric sheet, and an electrically conductive nonwoven fabric sheet.

12. The fuel cell according to any one of claims 8 to 11, wherein the anode includes graphite, and
the graphene layers in the graphite are arrayed along a direction perpendicular to a lamination direction of the anode and the cathode.

13. The fuel cell according to any one of claims 8 to 12, further comprising:
an ion transfer layer that permeates hydrogen ions, the ion transfer layer being provided between the anode and the cathode.

14. The fuel cell according to claim 13, wherein the ion transfer layer includes at least one selected from the group consisting of a porous sheet, a woven fabric sheet and a nonwoven fabric sheet.

15. A water treatment device comprising:
an anode that supports microorganisms purifying a liquid to be treated; and
a cathode being the electrode according to any one of claims 1 to 7.
